**Europäisches Patentamt**

**European Patent Office**

**Office européen des brevets**

(19)

(11) Veröffentlichungsnummer: **0 019 743 B1**

(12) **EUROPÄISCHE PATENTSCHRIFT**

(45) Veröffentlichungstag der Patentschrift:
**15.02.84**

(21) Anmeldenummer: **80102394.6**

(22) Anmeldetag: **02.05.80**

(51) Int. Cl.³: **F 04 D 15/00**, F 24 D 3/02, F 24 D 19/10

(54) Temperaturabhängig gesteuerte Umwälzpumpe für Heizungsanlagen.

(30) Priorität: **19.05.79 DE 2920313**

(43) Veröffentlichungstag der Anmeldung:
**10.12.80 Patentblatt 80/25**

(45) Bekanntmachung des Hinweises auf die Patenterteilung:
**15.02.84 Patentblatt 84/7**

(84) Benannte Vertragsstaaten:
**AT BE CH FR GB IT LI NL SE**

(56) Entgegenhaltungen:
**CH - A - 125 904**
**FR - A - 1 211 723**
**FR - A - 2 137 388**
**US - A - 2 518 597**
**US - A - 3 841 793**
**US - A - 4 171 771**

(73) Patentinhaber: **Grundfos Pumpenfabrik GmbH, D-2362 Wahlstedt (DE)**

(72) Erfinder: **Jensen, Niels Due, Oestre Ring Vej 7-11, DK-8850 Bjerringbro (DK)**
Erfinder: **Komossa, Horst, Prof. Dr. Ing., Seestrasse 10, D-2361 Wittenborn (DE)**

(74) Vertreter: **Wilcken, Thomas, Dipl.-Ing. et al, Musterbahn 1, D-2400 Lübeck (DE)**

## Temperaturabhängig gesteuerte Umwälzpumpe für Heizungsanlagen

Die Erfindung betrifft eine temperaturabhängig gesteuerte Umwälzpumpe für Heizungsanlagen, die mit mindestens zwei Drehzahlen zu betreiben ist, wobei ein Temperaturfühler beim Durchlaufen einer vorgewählten Schalttemperatur die Drehzahl ändert und die zu wählende Drehzahl durch die Richtung des Temperaturgradienten festgelegt ist und wobei der Temperaturfühler von zwei Temperaturen beeinflusst wird, deren eine die Vorlauftemperatur der Heizungsanlage ist. Eine Umwälzpumpe dieser Art ist aus der FR-A-2 137 388 bekannt.

Andere Pumpen mit einem Temperaturfühler sind in der FR-A-1 211 721 und in der US-A-2 518 595 dargestellt und beschrieben. Bei diesen Pumpen dient der Temperaturfühler zum Abschalten des Pumpenmotors, sobald eine eingestellte Temperatur überschritten wird, um eine Beschädigung des Motors durch Überhitzung zu vermeiden. Um die Motortemperatur direkt überwachen zu können, ist der Temperaturfühler im Motorkopf installiert, wobei unter dem Begriff «Motorkopf» der Teil des Pumpenaggregates zu verstehen ist, der üblicherweise seitlich am Pumpengehäuse angeschraubt ist und in dessen Gehäuse die mechanischen und elektrischen Teile des Pumpenmotors untergebracht sind.

Heizungsanlagen werden für eine bestimmte tiefste Aussentemperatur ausgelegt. Diese ist regional verschieden und liegt zwischen $-10$ und $-16\,°C$. Nach einem Entwurf des Deutschen Normenausschusses (DIN 4701) ist diese Auslegetemperatur «das tiefste Zweitagesmittel der Lufttemperatur (10mal in 20 Jahren) während der Zeitspanne 1951 bis 1970». Richtig berechnete und betriebene Heizungsanlagen werden dementsprechend also durchschnittlich höchstens an zwei Tagen des Jahres mit Vollast und an den etwa 230 restlichen Tagen der Heizperiode mit Teillast betrieben.

Der Wärmeverbrauch eines Hauses $\varnothing 1$ hängt von der Differenz zwischen der gewünschten Innentemperatur $t_i$ und der vorliegenden Aussentemperatur $t_a$ ab. Er lässt sich beschreiben durch die Formel $\varnothing 1 = \text{konst.}\,(t_i - t_a)$. Diese an die Umgebung abfliessende Wärmeleistung muss im Heizkessel als Wärmeleistung $\varnothing 2$ an das Wasser abgegeben und von der Pumpe mit dem Förderstrom $Q$ in das System transportiert werden.

Im Beharrungszustand ($t_a$ und $t_i = \text{konst.}$) gilt mit $t_v$ für die Vorlauftemperatur und $t_r$ für die Rücklauftemperatur $\varnothing 1 = \varnothing 2 = \text{konst.}\,Q\,(t_v - t_r)$.

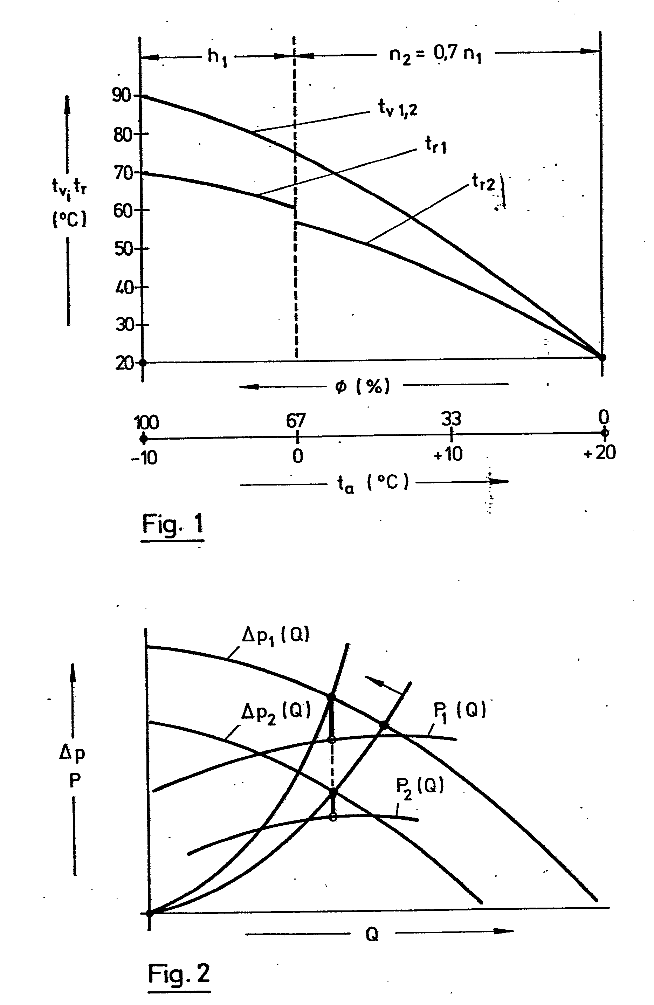

Für ein Gebäude, dessen Heizungsanlage mit witterungsgeführter Vorlauftemperatur arbeitet, lassen sich die Temperaturverhältnisse in einem Schaubild darstellen, mit dessen Hilfe das Pumpenproblem einfach zu diskutieren ist. Zu diesem Zweck wird auf die beiliegende Fig. 1 Bezug genommen. Die Kurve $t_{v1,2}$ gibt die zur Aussentemperatur $t_a$ gehörende Vorlauftemperatur $t_{v1,2}$ an, was bedeutet, dass diese Temperatur sowohl bei der Drehzahl n1 als auch n2 von der Anlagenregelung vorgeschrieben wird. Schaltet man bei einer bestimmten Heizleistung die Pumpe von der hohen Drehzahl n1 und dem grossen Förderstrom, bei dem die Rücklauftemperatur $t_{r1}$ gemessen wird, auf die niedrige Drehzahl n1 um, dann sinkt mit dem Förderstrom auch die Rücklauftemperatur ab und nimmt den Wert $t_{r2}$ an. Wenn man annimmt, dass sich die Pumpe mit den beiden Drehzahlen n1 und $n2 = 0,7 \times n1$ betreiben lässt, dann ist es immer erlaubt, die Pumpe von der Drehzahl n1 auf die niedrigere Drehzahl n2 umzuschalten, sobald der Wärmeverbrauch des Hauses auf Werte unter 70% der Leistung des Heizungssystems fällt. Ein Komfortverlust ist durch die Reduzierung des Förderstromes auf 70% ausgeschlossen, da die Wärmeleistung der Heizkörper wegen der nun längeren Verweilzeit des Wassers nur unwesentlich zurückgeht.

Auch Für Umwälzpumpen gelten die Modellgesetze der Kreiselpumpen $Q \sim n$, $\Delta p \sim n^2$ und $P \sim n^3$, die zeigen, dass mit dem Umschalten von der hohen auf die niedrigere Drehzahl ein beachtlicher Teil der elektrischen Energie P eingespart wird. Da die Erfahrung zeigt, dass Heizungsanlagen nur während etwa 10% der Heizperiode mit Leistungen über 70% gefahren werden, lassen sich die Betriebskosten von Umwälzpumpen um ca. 60% reduzieren, da die reduzierte Antriebsleistung

$$P2 = \left(\frac{n2}{n1}\right)^3 \times P1 = 0,7^3 \times P1 = 0,34\,P1$$

ist und der Energieverbrauch einer leistungsgerecht betriebenen Pumpe während der Heizperiode H sich dann wie folgt errechnen lässt:

$$E2 = 0,1H \times P1 + 0,9H \times P2 = 0,4\,P1 \times H$$

Die gesetzlichen Vorschriften fordern ausser dem Einbau der witterungsgeführten Vorlauftemperaturregelung auch die Installation von Thermostatventilen an den jeweiligen Heizkörpern. Durch solche Ventile wird die Heizungsleistung um die von Fremdwärmequellen kommende Wärme bzw. Energie, wie beispielsweise Sonnenenergie, vermindert, denn ein Thermostatventil schliesst und reduziert bekanntlich den Wasserstrom durch den Heizkörper, sobald die Raumtemperatur den am Ventil eingestellten Wert unabhängig davon erreicht hat, woher die Wärme kommt. Durch das Vermindern des Förderstromes steigt die von der Pumpe erzeugte Druckdifferenz entsprechend den in Fig. 2 gezeigten Drosselkurven an. Dadurch können störende Strömungsgeräusche in der Anlage entstehen. Die beim hier diskutierten Fall nun geforderte kleinere Wassermenge lässt sich aber auch fördern, wenn die Pumpe mit der niedrigeren Drehzahl n2 läuft. Durch das Fahren mit der niedrigeren Drehzahl n2 wird aber nicht nur Energie gespart, sondern auch das erwähnte Geräusch-problem gelöst.

Die Fig. 2 zeigt diese Zusammenhänge übrigens nur vereinfacht und schematisch und soll nur zur Erklärung der Überlegung dienen, dass sich der gleiche Förderstrom Q bei verschiedenen Drehzahlen n mit unterschiedlichen Antriebsleistungen P erreichen lässt.

Um die Möglichkeiten der Energieeinsparung voll zu nutzen, bedarf es einer speziellen Steuerung. Diese Steuerung muss sowohl die Aussentemperatur oder Vorlauftemperatur als auch die von der Pumpe gelieferte Druckdifferenz erfassen. Alle zur Zeit auf dem Markt zu habenden Steuerungen, die diese Forderungen erfüllen können, sind kompliziert nicht nur des Aufbaues wegen, sondern auch wegen der anzuwendenden Mittel für die Entnahme bzw. Gewinnung des erforderlichen Steuersignales. Die Temperatur wird irgendwo im System festgestellt und die Förderhöhe durch die Messung der statischen Drücke am Pumpendruck- und Pumpensaugstutzen erfasst. Die Installation einer solchen Steuerung fordert Fachkenntnisse und Zeit. Ferner ist zu bemängeln, dass das Heizungssystem durch die Installation eines Druckschalters erweitert und seine Sicherheit dadurch vermindert wird. Durch Bruch einer der zum Druckschalter führenden Messleitungen oder des Schalters selbst können nämlich Wasserschäden beachtlicher Grösse entstehen. Tatsache ist es jedenfalls, dass aus den genannten Gründen und wegen der relativ hohen Kosten die an sich gebotenen Möglichkeiten der Energieeinsparung nur selten genutzt werden.

Die Aufgabe der Erfindung besteht in der Beseitigung der aufgezeigten Nachteile und in der Schaffung einer «intelligenten», sich selbst steuernden Pumpe, die wie auch jedes nichtgeregelte Aggregat einfach installiert und elektrisch angeschlossen werden kann. Demgemäss soll ein Weg gefunden werden, um die von der Pumpe erzeugte Druckdifferenz ohne das hydraulische Messen der Pumpendrücke zu erfassen. Ausserdem soll die Druckdifferenz mit der Wärmeleistung der Heizungsanlage in geeigneter Weise gekoppelt werden.

Zur Lösung dieser Aufgabe wird, ausgehend von einer Umwälzpumpe der eingangs erwähnten Art, so vorgegangen, dass die andere den Temperaturfühler beeinflussende Temperatur die Wicklungstemperatur des Pumpenmotors ist, dass die Schalttemperatur im Augenblick einer durchzuführenden Drehzahländerung zwischen der Vorlauftemperatur und der Wicklungstemperatur liegt und dass die Temperatur im Motorkopf auf direktem Weg des Wärmeflusses von der Motorwicklung zum Heizungswasser gemessen wird.

Der Gesetzgeber schreibt bei Heizungsanlagen für mehr als zwei Wohnungen den Einbau einer witterungsgeführten Vorlauftemperaturregelung vor. Diese Vorlauftemperatur ist damit einer der Indikatoren für die Wärmeleistung der Anlage. Die zweite Steuergrösse als Ersatz für die bisher ausgewertete Druckdifferenz muss zeigen, ob die zur Aussentemperatur gehörende Wärmeleistung von der Anlage überhaupt gefordert wird. Dies ist nicht der Fall, wenn Heizkörper von den Einwohnern oder durch Sonneneinstrahlung von den Thermostatventilen abgestellt werden. Als Ersatz für die Druckdifferenzmessung wird der Erfindung entsprechend die Wicklungstemperatur des Pumpenmotors ausgewertet.

Alle Umwälzpumpen für Heizungsanlagen haben gemäss Fig. 2 eine relativ steile Drosselkurve und eine stetig mit dem Förderstrom ansteigende Antriebsleistung P. Je kleiner also der Förderstrom ist, um so grösser ist zwar die von der Pumpe erzeugte Druckdifferenz, aber um so niedriger ist gleichfalls die Pumpenmotorleistung P und damit die Wicklungstemperatur.

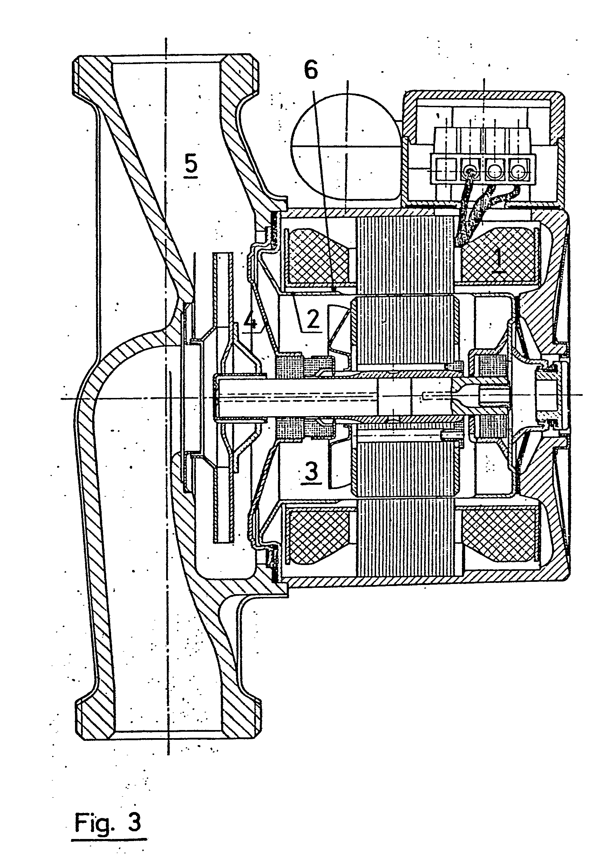

Unter Berücksichtigung der vorstehenden Überlegungen können die Vorlauftemperatur des Heizungswassers und die Wicklungstemperatur des Motors auf folgende Weise zur Gewinnung einer Schalttemperatur verknüpft werden, wobei zur Erläuterung der praktisch gegebenen Möglichkeiten auf die in Fig. 3 im Querschnitt gezeigte Umwälzpumpe Bezug genommen wird. Der Aufbau und die Funktion einer solchen Pumpe sind allgemein bekannt und brauchen deshalb nicht im einzelnen erläutert zu werden. Deshalb wird nachfolgend nur auf einige im Zusammenhang mit der Erfindung interessierende Bauteile hingewiesen.

Die in den Wicklungen 1 des Stators auftretenden Stromwärmeverluste werden zu etwa 10% durch Strahlung und Konvektion vom Motorkopf an die Umgebungsluft abgegeben. Etwa 90% der Verluste werden aufgrund von Wärmeleitung durch das den Statorraum und den Rotorraum trennende Spaltrohr 2 auf das im Rotorraum 3 befindliche Wasser übertragen. Vom Wasser des Rotorraumes wird die Wärme an die Trennwand 4 abgegeben, durch diese hindurchgeleitet und an das im Pumpengehäuse 5 befindliche Vorlauf-Heizungswasser abgeführt. Um nun erfindungsgemäss die Schalttemperatur zwischen die Vorlauftemperatur und die Wicklungstemperatur legen zu können, braucht nur ein Temperaturfühler verwendet zu werden, der sowohl zur Feststellung der Wärmeleistung der Heizungsanlage als auch der Belastung der Pumpe dienen kann. Ein solcher Fühler 6 ist dann im Motorkopf auf dem Wärmeflussweg zwischen der Wicklung 1 und dem Heizungswasser zu installieren. Eine hierfür gut geeignete Stelle ist gemäss Fig. 3 die äussere Oberfläche des Spaltrohres 2. Dieser Fühler ist elektrisch in geeigneter Weise in den Steuerkreis des Pumpenmotors eingeschaltet, um diesen beim Überschreiten oder Unterschreiten der vorgewählten Schalttemperatur auf die eine oder andere Drehzahl umzuschalten.

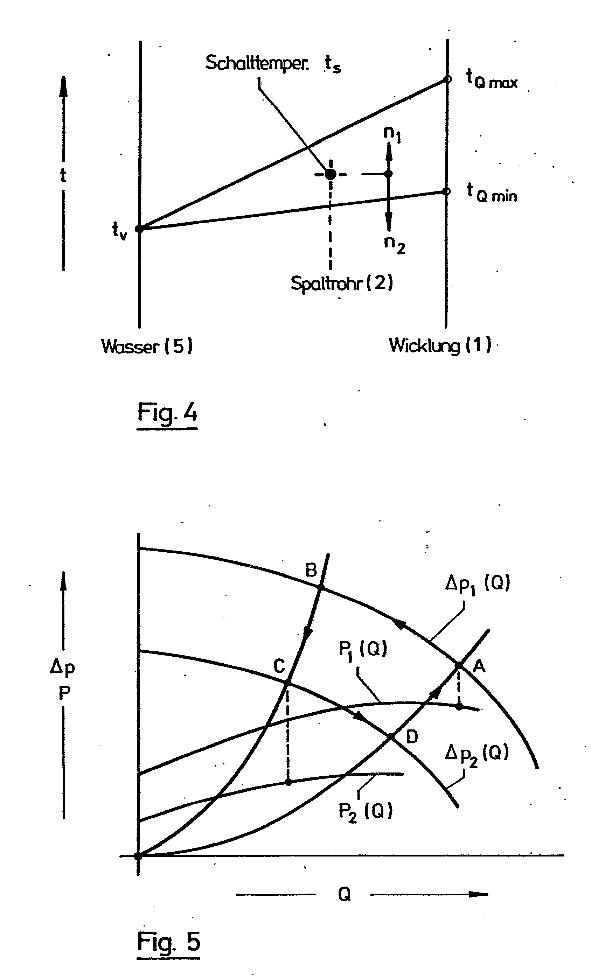

Die Temperatur am Ort des Temperaturfühlers 6 ändert sich bei den verschiedenen Betriebszuständen so, wie es in Fig. 4 schematisch dargestellt ist. Wärmesenke für die Verlustleistung des Pumpenmotors ist das Heizungswasser, dessen Vorlauftemperatur $t_v$ durch die Aussentemperatur bestimmt ist. Die Temperatur $t_Q$ der Motorwicklung ist stets höher als $t_v$. Sie liegt bei der gegebenen Vorlauftemperatur bei $t_{Qmin}$, wenn der Motor niedrig und bei $t_{Qmax}$, wenn der Motor hoch belastet wird. Die Schalttemperatur $t_s$ muss den vorstehend erwähnten Forderungen entsprechend natürlich zwischen den Werten $t_v$ und $t_Q$ liegen.

Die mit der Erfindung erzielten Vorteile sowie die Arbeitsweise der Steuerung lassen sich einfach durch Beschreibung eines Regelvorganges erklären, wobei auf die Fig. 4 und auch 5 Bezug genommen wird, welche die Kennlinien einer Kreiselpumpe bei den Drehzahlen n1 und n2 mit Rohrnetzkennlinien eines Heizungssystems darstellt.

Bei hohen Aussentemperaturen stellt der witterungsgeführte Mischer die Vorlauftemperatur $t_v$ auf einen entsprechend niedrigen Wert ein. Das in Fig. 4 gezeigte Temperaturdreieck $t_v$–$t_{Qmin}$–$t_{Qmax}$ wird dabei, ohne seine Form zu ändern, nach unten verschoben. Die Verbindungslinie $t_v$–$t_{Qmax}$ verläuft sodann unterhalb der fest vorgewählten Schalttemperatur $t_s$, so dass also die Pumpe nur mit der niedrigen Drehzahl n2 fahren kann. Diese Drehzahl reicht aus, um den Wärmeverbrauch während etwa 90% der Tage einer Heizperiode zu decken.

Sinkt die Aussentemperatur beispielsweise auf Werte unter $-2\,°C$ ab, dann stellt der witterungsgeführte Mischer eine Vorlauftemperatur $t_v$ ein, die entsprechend höher liegt. Wenn die zur Aussentemperatur gehörende Wärmeleistung der Anlage auch von den Hausbewohnern gefordert wird, also wenn etwa alle Thermostatventile geöffnet sind, so läuft die Pumpe im Arbeitspunkt A mit der Drehzahl n1 (Fig. 5). Die Schalttemperatur $t_s$ liegt nun im Temperaturdreieck entsprechend Fig. 4.

Werden die oder einige Thermostatventile der Heizkörper bei dieser Aussentemperatur geschlossen, weil die Bewohner die Heizung drosseln wollen oder weil Wärme durch Sonneneinstrahlung in die Wohnungen einfällt, dann bewegt sich der Betriebspunkt der Pumpe vom Punkt A auf der Kurve $\Delta p1\,(Q)$ nach Punkt B. Dadurch sinkt die Belastung des Motors, und die Wicklungstemperatur fällt von $t_{Qmax}$ auf $t_{Qmin}$. Beim Durchlaufen der Schalttemperatur $t_s$ wird die Pumpe von n1 auf n2 heruntergeschaltet, d. h., sie läuft vom Arbeitspunkt B zum Punkt C. Auf der Kennlinie $\Delta p2\,(Q)$ findet sie schliesslich ihren neuen Betriebspunkt zwischen C und D.

Wenn die Thermostatventile wieder öffnen, wird der Förderstrom Q grösser und der Motor stärker belastet. Beim Erreichen des Punktes D wird die Pumpe von n2 auf n1 hochgeschaltet und läuft damit von D nach A. In der hohen Drehzahl n1 wird die Pumpe verbleiben, solange die Aussentemperatur unter $-2\,°C$ steht und die Thermostatventile geöffnet sind.

Ein wesentlicher Vorteil der Erfindung liegt darin, dass die bisher übliche und aufwendige Messung der Druckdifferenz auf eine einfache Temperaturmessung zurückgeführt wird. Wie das zuvor beschriebene Ausführungsbeispiel gezeigt hat, ist nicht einmal diese Temperatur unmittelbar zu messen, da es genügt, einen Wert zwischen den Temperaturen im Heizungskreis und der Motorwicklung festzustellen. Dadurch wird die Steuerung nicht nur vereinfacht, sondern auch wesentlich sicherer.

Es besteht natürlich auch die Möglichkeit, mit mehr als einem Temperaturfühler und damit mit mehreren Schalttemperaturen $t_s$ zu arbeiten, wenn der Pumpenmotor bei Bedarf auf mehr als zwei Drehzahlen umgesteuert werden soll. Auch in diesem Fall könnten die Temperaturfühler im Motorkopf untergebracht werden, wobei verständlicherweise nur darauf zu achten sein wird, dass die Temperaturfühler an unterschiedlichen Stellen des Temperaturgefälles zwischen dem Wicklungsraum und dem Pumpenraum angeordnet werden.

Wenn auch die Messung der Schalttemperatur und damit die Anbringung des Temperaturfühlers am Spaltrohr des Pumpenmotors eine besonders günstige Lösung ist, könnte der Temperaturfühler unter anderem auch im Blechpaket des Stators untergebracht werden, also die Schalttemperatur im Statorblechpaket gemessen werden.

Von besonderer Bedeutung ist es auch, dass das Pumpenaggregat, der vom Temperaturfühler gesteuerte Pumpendrehzahlschalter und der Temperaturfühler eine bauliche Einheit bilden. Hierdurch entfallen nämlich Installationen von langen Steuerleitungen zwischen dem Pumpenaggregat und einem externen Steuergerät, da letzteres den Vorschriften entsprechend nicht im Heizungsraum installiert sein darf.

**Patentansprüche**

1. Temperaturabhängig gesteuerte Umwälzpumpe für Heizungsanlagen, die mit mindestens zwei Drehzahlen zu betreiben ist, wobei ein Temperaturfühler (6) beim Durchlaufen einer vorgewählten Schalttemperatur die Drehzahl ändert und die zu wählende Drehzahl durch die Richtung des Temperaturgradienten festgelegt ist und wobei der Temperaturfühler von zwei Temperaturen beeinflusst wird, deren eine die Vorlauftemperatur der Heizungsanlage ist, dadurch gekennzeichnet, dass die andere den Temperaturfühler beeinflussende Temperatur die Wicklungstemperatur des Pumpenmotors ist, dass die Schalttemperatur im Ausgenblick einer durchzuführenden Drehzahländerung zwischen der Vorlauftemperatur und der Wicklungstemperatur liegt und dass die Temperatur im Motorkopf auf direktem Weg des Wärmeflusses von der Motorwicklung (1) zum Heizungswasser gemessen wird.

2. Umwälzpumpe nach Anspruch 1, dadurch gekennzeichnet, dass bei Verwendung einer Spaltrohrpumpe als Umwälzpumpe die Temperatur am Spaltrohr (2) des Pumpenmotors gemessen wird.

3. Umwälzpumpe nach Anspruch 1, dadurch gekennzeichnet, dass die Temperatur im Blechpaket des Stators des Pumpenmotors gemessen wird.

**Claims**

1. Circulating pump for heating plants, controlled as a function of temperature, which is to be operated at two speeds of revolution at least, a temperature sensor (6) altering the speed of revolution when a preselected switching temperature is being passed through and the speed of revolution which is to be selected being determined by the direction of the temperature gradient and the temperature sensor being affected by two temperatures, of which one is the feed temperature of the heating plant, characterised in that the other temperature affecting the temperature sensor is the temperature of the winding of the pump motor, that the switching temperature at the instance of an r.p.m. variation which is to be performed lies between the feed temperature and the winding temperature and that the temperature in the motor head is measured along the direct path of the heat flux from the motor winding (1) to the heating water.

2. Circulating pump according to claim 1, characterised in that when a split tube pump is utilised as a circulating pump, the temperature is measured at the split tube (2) of the pump motor.

3. Circulating pump according to claim 1, characterised in that the temperature is measured within the packet of laminations of the stator of the pump motor.

**Revendications**

1. Pompe de circulation pour installations de chauffage central, contrôlée par la température, qu'on peut faire fonctionner à au moins deux vitesses, un capteur de température (6) changeant la vitesse au franchissement d'une température de commutation choisie à l'avance et la vitesse à choisir étant fixée par le sens du gradient de température, le capteur de température étant influencé par deux températures dont l'une est la température de départ de l'installation de chauffage, caractérisée par le fait que l'autre température influençant le capteur de température est la température de l'enroulement du moteur de la pompe, que la température de commutation, à l'instant où un changement de vitesse doit être réalisé, se situe entre la température de départ et la température de l'enroulement, et que la température dans la tête du moteur est mesurée sur le trajet direct du flux de chaleur de l'enroulement (1) du moteur à l'eau de chauffage.

2. Pompe de circulation selon la revendication 1, caractérisée par le fait qu'en cas d'emploi d'une pompe à tube fendu comme pompe de circulation, la température est mesurée sur le tube fendu (2) du moteur de la pompe.

3. Pompe de circulation selon la revendication 1, caractérisée par le fait que la température est mesurée dans le paquet de tôles du stator du moteur de la pompe.

Fig. 1

Fig. 2

Fig. 3

Fig. 4

Fig. 5